# EUROPEAN PATENT APPLICATION

(11) **EP 3 933 069 A1**
(43) Date of publication of application: **05.01.2022**
(21) Application number: 20183855.4
(22) Date of filing: 03.07.2020
(51) Int. Cl.: C25B 9/19, C25B 13/02, C25B 13/08, C08J 5/22

(54) **A SEPARATOR FOR ALKALINE WATER ELECTROLYSIS**

(71) Applicant: AGFA-GEVAERT NV, 2640 Mortsel (BE)
(72) Inventor: MUES, Willem, 2640 Mortsel (BE); VERWAEST, Hanne, 2640 Mortsel (BE); TUDISCO, Cristina, 2640 Mortsel (BE)
(74) Representative: Viaene, Kris

(57) **Abstract**

A separator for alkaline electrolysis comprising a porous support (10) and a first (20b) and second (30b) porous layer provided on respectively one side and the other side of the porous support, characterized in that the porous support has a thickness (d1) of 150 µm or less and the total thickness (d2) of the separator is less than 250 µm. Also a method is disclosed wherewith such a separator may be prepared.

## Description

### Technical field of the Invention

The present invention relates to a method of manufacturing a separator for alkaline water electrolysis and to separators obtained with the method.

### Background art for the invention

Nowadays, hydrogen is used in several industrial processes, for example its use as raw material in the chemical industry and as a reducing agent in the metallurgic industry. Hydrogen is a fundamental building block for the manufacture of ammonia, and hence fertilizers, and of methanol, used in the manufacture of many polymers. Refineries, where hydrogen is used for the processing of intermediate oil products, are another area of use.

Hydrogen is also being considered an important future energy carrier, which means it can store and deliver energy in a usable form. Energy is released by an exothermic combustion reaction with oxygen thereby forming water. During such combustion reaction, no greenhouse gases containing carbon are emitted.

For the realization of a low-carbon society, renewable energies using natural energy such as solar light and wind power are becoming more and more important.

The production of electricity from wind power and solar power generation systems is very much dependent on the weather conditions and therefore variable, leading to an imbalance of demand and supply of electricity. To store surplus electricity, the so-called power-to-gas technology wherein electrical power is used to produce gaseous fuel such as hydrogen, attracted much interest in recent years. As production of electricity from renewable energy sources will increase, the demand for storage and transportation of the produced energy will also increase.

Alkaline water electrolysis is an important manufacturing process wherein electricity may be converted into hydrogen.

In an alkaline water electrolysis cell, a so-called separator or diaphragm is used to separate the electrodes of different polarity to prevent a short circuit between these electronic conducting parts (electrodes) and to prevent the recombination of hydrogen (formed at the cathode) and oxygen (formed at the anode) by avoiding gas crossover. While serving in all these functions, the separator should also be a highly ionic conductor for transportation of hydroxyl ions from the cathode to the anode.

A separator typically includes a porous support. Such a porous support reinforces the separator facilitating the manipulation of the separator and the introduction of the separator in an electrolyser as disclosed in EP-A 232 923 (Hydrogen Systems).

EP-A 1776490 (VITO) discloses a process of preparing a reinforced separator. The process leads to a membrane with symmetrical characteristics. The process includes the steps of providing a porous support as a web and a suitable dope solution, guiding the web in a vertical position, equally coating both sides of the web with the dope solution to produce a web coated support, and applying a symmetrical surface pore formation step and a symmetrical coagulation step to the dope coated web to produce a reinforced membrane.

WO2009/147084 and WO2009/147086 (Agfa Gevaert and VITO) disclose manufacturing methods to produce a reinforced membrane with symmetrical characteristics as described in EP-A 1776490. The porous support used in these manufacturing methods have a thickness of more than 190 µm.

However, a porous support may decrease the ionic conductivity through the separator and therefore the efficiency of the electrolytic process.

There is thus a need for separators having sufficient mechanical qualities combined with a high ionic conductivity.

### Summary of the invention

It is an object of the invention to provide a separator having sufficient mechanical qualities and an improved ion conductivity.

This object is realized with the separator as defined in claim 1.

It is another object of the invention to provide a method of preparing such a separator.

Further objects of the invention will become apparent from the description hereinafter.

### Brief description of the drawings

**Figure 1** shows schematically an embodiment of a separator according to the present invention.
**Figure 2** shows schematically an embodiment of a manufacturing method of a separator according to the present invention.
**Figure 3** shows schematically another embodiment of a manufacturing method of a separator according to the present invention.
**Figure 4** illustrates the waviness observed on separators prepared in the examples (Fig.4A = S1; Fig.4B = S2).

### Detailed description of the invention

### Separator for alkaline water electrolysis

The separator for alkaline electrolysis (1) according to the present invention comprises a porous support (10) and a first (20b) and second (30b) porous layer provided on respectively one side and the other side of the porous support, characterized in that a thickness of the porous support (d1) is 150 µm or less and a thickness of the separator (d2) is 250 µm or less.

The thickness of the separator d2 is preferably 225 µm or less, more preferably 200 µm or less, most preferably 175 µm or less, particularly preferred 150 µm or less. If the thickness of the separator is less than 100 µm, its physical strength may become insufficient, when the thickness is above 250 µm, the electrolysis efficiency may decrease.

The separator preferably has an ionic resistance of less than 0.1 ohm.cm², more preferably less than 0.07 ohm.cm² at 80°C in a 30 wt% aqueous KOH solution.

The ionic resistance may be determined with an Inolab^{®} Multi 9310 IDS apparatus available from VWR, part of Avantor, equipped with a TetraCon 925 conductivity cell available from Xylem.

The first and the second porous layers provided on the porous support may be the same or different.

A described below in more detail a preferred separator is prepared by the application on both surfaces of a porous support a coating solution, also referred to as a dope solution, comprising a polymer resin, hydrophilic inorganic particles and a solvent. The porous layer is then obtained after a phase inversion step wherein the polymer resin forms a three-dimensional porous polymer network.

Upon application of the dope solutions on both surfaces of the porous support, the dope solutions impregnate the porous support. The porous support is preferably completely impregnated with the dope solutions.

After phase inversion, the impregnation of the porous support ensures that the three-dimensional porous polymer network also extends into the porous support. This results in a good adhesion between the porous layer and porous support.

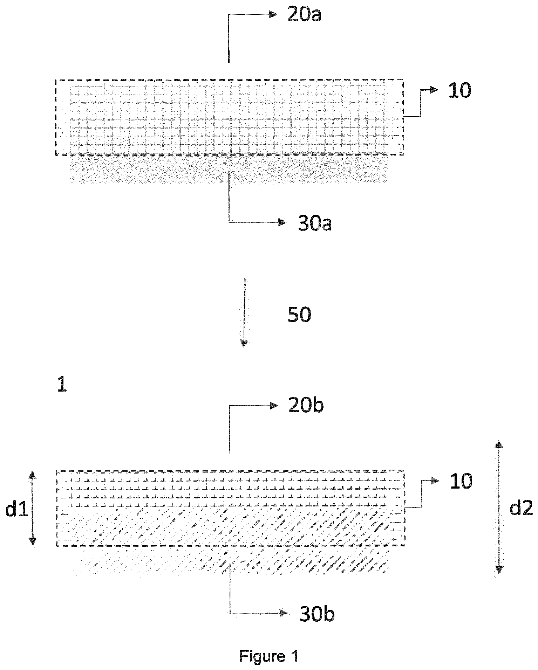

A preferred separator (1) is schematically shown in Figure 1.

A dope solution has been applied on both sides of a porous support (10) and the porous support is fully impregnated with the applied dope solution. The applied dope layers are referred to as 20a and 30a.

After a phase inversion step (50), a separator is obtained comprising a porous support (10) and on either side of the support a porous layer (20b, 20b).

The pore diameter of the separator has to be sufficiently small to prevent recombination of hydrogen and oxygen by avoiding gas crossover. On the other hand, to ensure efficient transportation of hydroxyl ions from the cathode to the anode, larger pore diameters are preferred. An efficient transportation of the hydroxyl ions requires an efficient penetration of electrolyte into the separator.

The maximum pore diameter (PDmax) of the separator is preferably between 0.05 and 2 µm, more preferably between 0.10 and 1 µm, most preferably between 0.15 and 0.5 µm.

Both sides of the separator may have identical or different maximum pore diameters.

A preferred separator of which both sides have identical pore diameters is disclosed in EP-A 1776480 and WO2009/147084 mentioned above.

A preferred separator of which both sides have different pore diameters is disclosed in EP-A 3652362. The maximum pore diameter at the outer surface of a first porous layer PDmax(1) is preferably between 0.05 and 0.3 µm, more preferably between 0.08 and 0.25 µm, most preferably between 0.1 and 0.2 µm and the maximum pore diameter at the outer surface of a second porous layer PDmax(2) is preferably between 0.2 and 6.5 µm, more preferably between 0.2 and 1.50 µm, most preferably between 0.2 and 0.5 µm.
The ratio between PDmax(2) and PDmax(1) is preferably between 1.1 to 20, more preferably between 1.25 and 10, most preferably between 2 and 7.5.
The smaller PDmax(1) ensure an efficient separation of hydrogen and oxygen while PDmax(2) ensures a good penetration of the electrolyte in the separator resulting in a sufficient ionic conductivity.

The pore diameters referred to are preferably measured using the Bubble Point Test method described in American Society for Testing and Materials Standard (ASMT) Method F316.

The porosity of the separator is preferably between 30 and 70 %, more preferably between 40 and 60 %. A separator having a porosity within the above ranges typically has excellent ion permeability and excellent gas barrier properties because the pores of the diaphragm are continuously filled with an electrolyte solution.

### Porous support

The porous support is used to reinforce the separator to ensure its mechanical strength.

A thickness of the porous support (d1) is 150 µm or less, preferably 125 µm or less, more preferably 100 µm or less, most preferably 75 µm or less, particularly preferred 50 µm or less.

It has been observed that the ion conductivity through a reinforced separator increases when the thickness of the porous support decreases.

However, to ensure sufficient mechanical properties of the reinforced separator, the thickness of the porous support is preferably 20 µm or more, more preferably 40 µm or more.

The porous support may be selected from the group consisting of a porous fabric, a porous metal plate and a porous ceramic plate.

The porous support is preferably a porous fabric, more preferably a porous polymer fabric.

The porous polymer fabric may be woven or non-woven. Woven fabrics typically have a better dimensional stability and homogeneity of open area and thickness. However, the manufacture of woven fabrics with a thickness of 100 µm or less is more complex resulting in more expensive fabrics. The manufacture of non-woven fabrics is less complex, even for fabrics having a thickness of 100 µm or less. Also, non-woven fabrics may have a larger open area.

The open area of the porous support is preferably between 30 and 80%, more preferably between 40 and 70 %, to ensure a good penetration of the electrolyte into the support.

Suitable porous polymer fabrics are prepared from polypropylene, polyethylene (PE), polysulfone (PS), polyphenylene sulfide (PPS), polyamide/nylon (PA), polyether sulfone (PES), polyphenyl sulfone (PPSU), polyethylene terephthalate (PET), polyether-ether ketone (PEEK), sulfonated polyether-ether keton (s-PEEK), monochlorotrifluoroethylene (CTFE), copolymers of ethylene with tetrafluorethylene (ETFE) or chlorotrifluorethylene (ECTFE), polyimide, polyether imide and m-aramide.

A preferred polymer fabric is prepared from polypropylene (PP) or polyphenylene sulphide (PPS), most preferably from polyphenylene sulphide (PPS).

A polyphenylene sulfide based porous support has a high resistance to high-temperature, high concentration alkaline solutions and a high chemical stability against active oxygen evolved from an anode during the water electrolysis process. Also, polyphenylene sulphide can be easily processed into various forms such as a woven fabric or a non-woven fabric.

The density of the porous support is preferably between 0.1 to 0.7 g/cm³.

The porous support is preferably a continuous web to enable a manufacturing process as disclosed in EP-A 1776490 and WO2009/147084.

The width of the web is preferably between 30 and 300 cm, more preferably between 40 and 200 cm.

### Polymer resin

The porous layer preferably comprises a polymer resin.

The polymer resin forms a three dimensional porous network, the result of a phase inversion step in the preparation of the separator, as described below.

The polymer resin may be selected from a fluorine resin such as polyvinylidene fluoride (PVDF) and polytetrafluoroethylene (PTFE), an olefin resin such as polypropylene (PP), and an aromatic hydrocarbon resin such as polyethylene terephthalate (PET) and polystyrene (PS). The polymer resins may be used alone, or two or more of the polymer resins may be used in combination.

PVDF and vinylidenefluoride (VDF)-copolymers are preferred for their oxidation/reduction resistance and film-forming properties. Among these, terpolymers of VDF, hexanefluoropropylene (HFP) and chlorotrifluoroethylene (CTFE) are preferred for their excellent swelling properties, heat resistance and adhesion to electrodes.

Another preferred polymer resin is an aromatic hydrocarbon resin for their excellent heat and alkali resistance. Examples of an aromatic hydrocarbon resin include polyethylene terephthalate, polybutylene terephthalate, polybutylene naphthalate, polystyrene, polysulfone, polyethersulfone, polyphenylene sulfide, polyphenyl sulfone, polyacrylate, polyetherimide, polyimide, and polyamide-imide.

A particular preferred polymer resin is selected from the group consisting of polysulfone, polyethersulfone and polyphenylsulfone, polysulfone being the most preferred.

The molecular weight (Mw) of polysulfones, polyether sulfones and polyphenyl sulfones is preferably between 10 000 and 500 000, more preferably between 25 000 and 250 000. When the Mw is too low, the physical strength of the porous layer may become insufficient. When the Mw is too high, the viscosity of the dope solution may become too high.

Examples of polysulfones, polyether sulfones and combinations thereof are disclosed in EP-A 3085815, paragraphs [0021] to [0032].

### Inorganic hydrophilic particles

The hydrophilic layer preferably comprises hydrophilic particles.

Preferred hydrophilic particles are selected from metal oxides and metal hydroxides.

Preferred metal oxides are selected from the group consisting of zirconium oxide, titanium oxide, bismuth oxide, cerium oxide and magnesium oxide.

Preferred metal hydroxides are selected from the group consisting of zirconium hydroxide, titanium hydroxide, bismuth hydroxide, cerium hydroxide and magnesium hydroxide. A particularly preferred magnesium hydroxide is disclosed in EP-A 3660188, paragraphs [0040] to [0063].

Other preferred hydrophilic particles are barium sulfate particles.

Other hydrophilic particles that may be used are nitrides and carbides of Group IV elements of the periodic tables.

The hydrophilic particles preferably have a D50 particle size of 0.05 to 2.0 µm, more preferably of 0.1 to 1.5 µm, most preferably of 0.15 to 1.00 µm, particularly preferred of 0.2 to 0.75 µm. The D50 particle size is preferably less than or equal to 0.7 µm, preferably less than or equal to 0.55 µm, more preferably less than or equal to 0.40 µm.

The D50 particle size is also known as the median diameter or the medium value of the particle size distribution. It is the value of the particle diameter at 50% in the cumulative distribution. For example, if D50 = 0.1 um, then 50% of the particles are larger than 1.0 um, and 50% are smaller than 1.0 um.

The D50 particle size is preferably measured using laser diffraction, for example using a Mastersizer from Malvern Panalytical.

The amount of the hydrophilic particles relative to the total dry weight of the porous layer is preferably at least 50 wt%, more preferably at least 75 wt%.

The weight ratio of hydrophilic particles to polymer resin is preferably more then 60/40, more preferably more than 70/30, most preferably more than 75/25.

### Preparation of the separator

A preferred preparation method of the separator described above comprises the steps of:
- applying a dope solution as described below on both sides of a porous substrate; and
- performing phase inversion on the applied dope solutions thereby forming a first and a second porous layer on respectively one and the other side of the porous support,
   characterized in that the porous support has a thickness (d1) of 150 µm or less, the separator has a thickness (d2) of 250 µm or less and wherein the viscosity of the dope solutions measured at a shear rate of 100 s⁻¹ and a temperature of 20°C is at least 20 Pa.s, more preferably at least 30 Pa.s, most preferably at least 40 Pas.

A preferred method of manufacturing a reinforced separator is disclosed in EP-A 1776490 and WO2009/147084 for symmetric separators and EP-A 3652362 for asymmetric separators. These methods result in web-reinforced separators wherein the web, i.e. the porous support, is nicely embedded in the separator, without appearance of the web at a surface of the separator.

Other manufacturing methods that may be used are disclosed in EP-A 3272908.

### Dope solution

The dope solution preferably comprises a polymer resin as described above, hydrophilic particles as described above and a solvent.

The solvent of the dope solution is preferably an organic solvent wherein the polymer resin can be dissolved. Moreover, the organic solvent is preferably miscible in water.

The solvent is preferably selected from N-methyl-pyrrolidone (NMP), N-ethyl-pyrrolidone (NEP), N-butyl-pyrrolidone (NBP), N,N-dimethylformamide (DMF), formamide, dimethylsulfoxide (DMSO), N,N-dimethylacetamide (DMAC), acetonitrile, and mixtures thereof.

A highly preferred solvent, for health and safety reasons, is N-butyl-pyrrolidone (NBP).

The dope solution may further comprise other ingredients to optimize the properties of the obtained polymer layers, for example their porosity and the maximum pore diameter at their outer surface.

The dope solution preferably comprises an additive to optimize the pore size at the surface and inside of the porous layer. Such additives may be organic or inorganic compounds, or a combination thereof.

Organic compounds which may influence the pore formation in the porous layers include polyethylene glycol, polyethylene oxide, polypropylene glycol, ethylene glycol, tripropylene glycol, glycerol, polyhydric alcohols, dibutyl phthalate (DBP), diethyl phthalate (DEP), diundecyl phthalate (DUP), isononanoic acid or neo decanoic acid, polyvinylpyrrolidone, polyvinyl-alcohol, polyvinylacetate, polyethyleneimine, polyacrylic acid, methylcellulose and dextran.

Preferred organic compounds which may influence the pore formation in the porous layers are selected from polyethylene glycol, polyethylene oxide and polyvinylpyrrolidone.

A preferred polyethylene glycol has a molecular weight of from 10 000 to 50 000, a preferred polyethylene oxide has a molecular weight of from 50 000 to 300 000, and a preferred polyvinylpyrrolidone has a molecular weight of from 30 000 to 1 000 000.

A particularly preferred organic compound which may influence the pore formation in the porous layers is glycerol.

The amount of compounds which may influence the pore formation is preferably between 0.1 and 15 wt%, more preferably between 0.5 and 5 wt% relative to the total weight of the dope solution.

Inorganic compounds which may influence the pore formation include calcium chloride, magnesium chloride, lithium chloride and barium sulfate.

A combination of two or more additives that influence the pore formation may be used.

The dope solutions provided on either side of the porous support may be the same or different.

### Applying the dope solution

The dope solution may be applied on the surface of a substrate, preferably a porous support, by any coating or casting technique.

A preferred coating technique is extrusion coating.

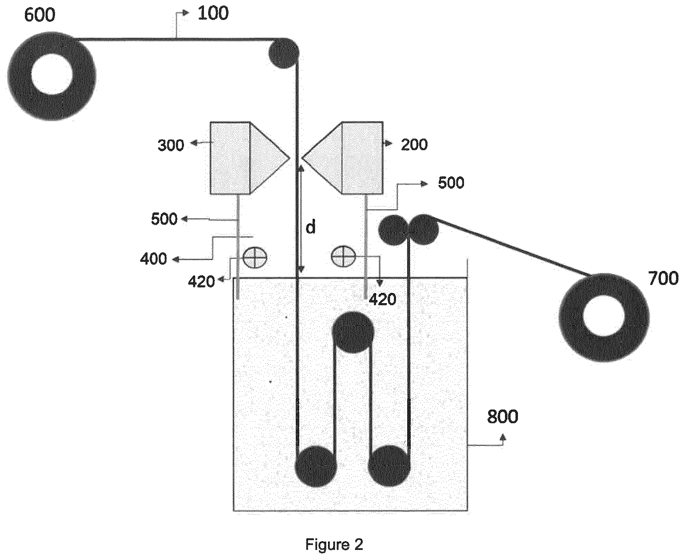

In a highly preferred embodiment, the dope solutions are applied by a slot die coating technique wherein two slot coating dies (Figures 2 and 3, 200 and 300) are located on either side of a porous support.

The slot coating dies are capable of holding the dope solution at a predetermined temperature, distributing the dope solutions uniformly over the support, and adjusting the coating thickness of the applied dope solutions.

The viscosity of the dope solutions measured at a shear rate of 100 s⁻¹ and a temperature of 20°C is at least 20 Pa.s, more preferably at least 30 Pa.s, most preferably at least 40 Pa.s.

The dope solutions are preferably shear-thinning. The ratio of the viscosity at a shear rate of 1 s⁻¹ to the viscosity at a shear rate of 100 s⁻¹ is preferably at least 2, more preferably at least 2.5, most preferably at least 5.

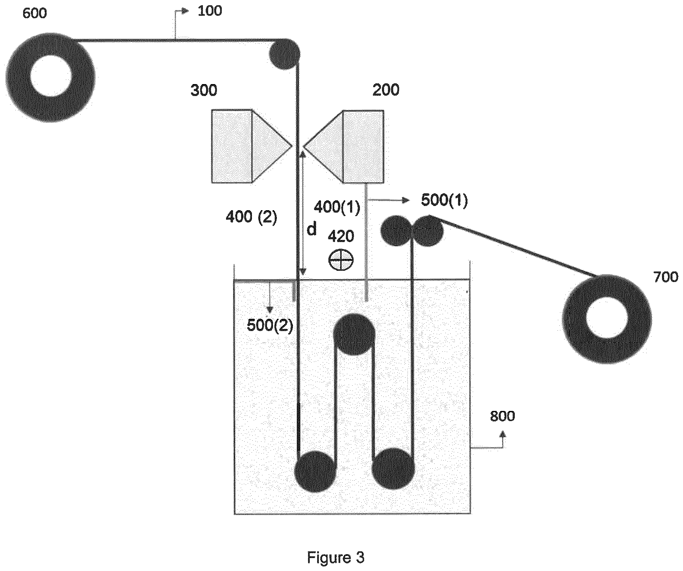

The porous support is preferably a continuous web, which is transported downwards between the slot coating dies (200, 300) as shown in Figures 2 and 3.

Immediately after the application, the porous support becomes impregnated with the dope solutions.

Preferably, the porous support becomes fully impregnated with the applied dope solutions.

### Phase inversion step

After applying the dope solution onto a porous support, the applied dope solution is subjected to phase inversion. In the phase inversion step, the applied dope solution is transformed into a porous hydrophilic layer.

In a preferred embodiment, both dope solutions applied on a porous support are subjected to phase inversion.

Any phase inversion mechanism may be used to prepare the porous hydrophilic layers from the applied dope solutions.

The phase inversion step preferably includes a so-called Liquid Induced Phase Separation (LIPS) step, a Vapour Induced Phase Separation (VIPS) step or a combination of a VIPS and a LIPS step. The phase inversion step preferably includes both a VIPS and a LIPS step.

Both LIPS and VIPS are non-solvent induced phase-inversion processes.

In a LIPS step the porous support coated on both sides with the dope solution is contacted with a non-solvent that is miscible with the solvent of the dope solution.

Typically, this is carried out by immersing the porous support coated on both sides with the dope solutions into a non-solvent bath, also referred to as coagulation bath.

The non-solvent is preferably water, mixtures of water and an aprotic solvent selected from the group consisting of N-methylpyrrolidone (NMP), dimethylformamide (DMF), dimethylsulfoxide (DMSO) and dimethylacetamide (DMAC), water solutions of water-soluble polymers such as PVP or PVA, or mixtures of water and alcohols, such as ethanol, propanol or isopropanol.

The non-solvent is most preferably water.

The temperature of the coagulation bath is preferably between 20 and 90°C, more preferably between 40 and 70°C.

The transfer of solvent from the coated polymer layer towards the non-solvent bath and of non-solvent into the polymer layer leads to phase inversion and the formation of a three-dimensional porous polymer network. The impregnation of the applied dope solution into the porous support results in a sufficient adhesion of the obtained hydrophilic layers onto the porous support.

In a preferred embodiment, the continuous web (100) coated on either side with a dope solution is transported downwards, in a vertical position, towards the coagulation bath (800) as shown in Figures 2 and 3.

In a VIPS step, the porous support coated with the dope solutions is exposed to non-solvent vapour, preferably humid air.

Preferably, the coagulation step included both a VIPS and a LIPS step. Preferably the VIPS step is carried out before the LIPS step. In a particular preferred embodiment, the porous support coated with the dope solutions is first exposed to humid air (VIPS step) prior to immersion in a water bath (LIPS step).

In the manufacturing method shown in Figure 2, VIPS is carried out in the area 400, between the slot coating dies (200, 300) and the surface of the non-solvent in the coagulation bath (800), which is shielded from the environment with for example thermal isolated metal plates (500).

The extent and rate of water transfer in the VIPS step can be controlled by adjusting the velocity of the air, the relative humidity and temperature of the air, as well as the exposure time.

The exposure time may be adjusted by changing the distance d between the slot coating dies (200, 300) and the surface of the non-solvent in the coagulation bath (800) and/or the speed with which the elongated web 100 is transported from the slot coating dies towards the coagulation bath.

The relative humidity in the VIPS area (400) may be adjusted by the temperature of the coagulation bath and the shielding of the VIPS area (400) from the environment and from the coagulation bath.

The speed of the air may be adjusted by the rotating speed of the ventilators (420) in the VIPS area (400).

The VIPS step carried out on one side of the separator and on the other side of the separator, resulting in the second porous polymer layer, may be identical (Figure 2) or different (Figure 3) from each other.

After the phase inversion step, preferably the LIPS step in the coagulation bath, a washing step may be carried out.

After the phase inversion step, or the optional washing step, a drying step is preferably carried out.

### Manufacturing of the separator

Figures 2 and 3 schematically illustrates a preferred embodiment to manufacture a separator according to the present invention.

The porous support is preferably a continuous web (100).

The web is unwinded from a feed roller (600) and guided downwards in a vertical position between two coating units (200) and (300).

With these coating units, a dope solution is coated on either side of the web. The coating thickness on either side of the web may be adjusted by optimizing the viscosity of the dope solutions and the distance between the coating units and the surface of the web. Preferred coating units are described in EP-A 2296825, paragraphs [0043], [0047], [0048], [0060], [0063], and Figure 1.

The web coated on both sides with a dope solution is then transported over a distance d downwards towards a coagulation bath (800).

In the coagulation bath, the LIPS step is carried out.

The VIPS step is carried out before entering the coagulation bath in the VIPS areas. In Figure 2, the VIPS area (400) is identical on both sides of the coated web, while in Figure 3, the VIPS areas (400(1)) and (400(2)) on either side of the coated web are different.

The relative humidity (RH) and the air temperature in de VIPS area may be optimized using thermally isolated metal plates. In Figure 2, the VIPS area (400) is completely shielded from the environment with such metal plates (500). The RH and temperature of the air is then mainly determined by the temperature of the coagulation bath. The air speed in the VIPS area may be adjusted by a ventilator (420).

In Figure 3 the VIPS areas (400(1)) and (400(2)) are different from each other. The VIPS area (400(1)) on one side of the coated web including a metal plate (500(1)) is identical to the VIPS area (400) in Figure 2. The VIPS area (400(2)) on the other side of the coated web is different from the area (400(1)). There is no metal plate shielding the VIPS area (400(2)) from the environment. However, the VIPS area (400(2)) is now shielded from the coagulation bath by a thermally isolated metal plate (500(2)). In addition, there is no ventilator present in the VIPS area 400(2). This results in a VIPS area (400(1)) having a higher RH and air temperature compared to the RH and air temperature of the other VIPS area (400(2)).

A high RH and/or a high air speed in a VIPS area typically result in a larger maximum pore diameter.

The RH in one VIPS area is preferably above 85%, more preferably above 90%, most preferably above 95% while the RH in another VIPS area is preferably below 80%, more preferably below 75%, most preferably below 70%.

After the phase separation step, the reinforced separator is then transported to a rolled up system (700).

A liner may be provided on one side of the separator before rolling up the separator and the applied liner.

### Electrolyser

The separator for alkaline water electrolysis according to the present invention may be a used in an alkaline water electrolyser.

An electrolysis cell typically consists of two electrodes, an anode and a cathode, separated by a separator. An electrolyte is present between both electrodes.

When electrical energy (voltage) is supplied to the electrolysis cell, hydroxyl ions of the electrolyte are oxidized into oxygen at the anode and water is reduced to hydrogen at the cathode. The hydroxyl ions formed at the cathode migrate through the separator to the anode. The separator prevents mixing of the hydrogen and oxygen gases formed during electrolysis.

An electrolyte solution is typically an alkaline solution. Preferred electrolyte solutions are aqueous solutions of electrolytes selected from sodium hydroxide or potassium hydroxide. Potassium hydroxide electrolytes are often preferred due to their higher specific conductivity. The concentration of the electrolyte in the electrolyte solution is preferably from 20 to 40 wt%, relative to the total weight of the electrolyte solution. The temperature of the electrolyte solution is preferably from 50°C to 120°C, more preferably from 75°C to 100°C.

An electrode typically include a substrate provided with a so-called catalyst layer. The catalyst layer may be different for the anode, where oxygen is formed, and the cathode, where hydrogen is formed.

Typical substrates are made from electrically conductive materials selected from the group consisting of nickel, iron, soft steels, stainless steels, vanadium, molybdenum, copper, silver, manganese, platinum group elements, graphite, and chromium. The substrates may be made from an electrically conductive alloy of two or more metals or a mixture of two or more electrically conductive materials. A preferred material is nickel or nickel-based alloys. Nickel has a good stability in strong alkaline solutions, has a good conductivity and is relatively cheap.

The catalyst layer provided on the anode preferably has a high oxygen-generating ability. The catalyst layer preferably includes nickel, cobalt, iron, and platinum group elements. The catalyst layer may include these elements as elemental metals, compounds (e.g., oxides), composite oxides or alloys made of multiple metal elements, or mixtures thereof. Preferred catalyst layers include plated nickel, plated alloys of nickel and cobalt or nickel and iron, complex oxides including nickel and cobalt such as LaNiO₃, LaCoO₃, and NiCo₂O₄, compounds of platinum group elements such as iridium oxide, or carbon materials such as graphene.

The Raney nickel structure is formed by selectively leaching aluminium or zinc from a Ni-AI or Ni-Zn alloy. Lattice vacancies formed during leaching result in a large surface area and a high density of lattice defects, which are active sites for the electrocatalytic reaction to take place.

The catalyst layer may also include organic substances such as polymers to improve the durability and the adhesion towards the substrate.

The catalyst layer provided on the cathode preferably has a high hydrogen-generating ability. The catalyst layer preferably includes nickel, cobalt, iron, and platinum group elements. To realize the desired activity and durability, the catalyst layer may include a metal, a compound such as an oxide, a complex oxide or alloy composed of a plurality of metal elements, or a mixture thereof. A preferred catalyst layer is formed from Raney Nickel; Raney alloys made of combinations of multiple materials (e.g. nickel and aluminium, nickel and tin); porous coatings made by spraying nickel compounds or cobalt compounds by plasma thermal spraying; alloys and composite compounds of nickel and an element selected from cobalt, iron, molybdenum, silver, and copper, for example; elementary metals and oxides of platinum group elements with high hydrogen generation abilities (e.g. platinum and ruthenium); mixtures of elementary metals or oxides of those platinum group element metals and compounds of another platinum group element (e.g. iridium or palladium) or compounds of rare earth metals (e.g. lanthanum and cerium); and carbon materials (e.g. graphene).

For providing higher catalyst activity and durability, the above described materials may be laminated in a plurality of layers, or may be contained in the catalyst layer.

An organic material, such as a polymer material, may be contained for improved durability or adhesiveness to the substrate.

In a so-called zero gap electrolytic cell the electrodes are placed directly in contact with the separator thereby reducing the space between both electrodes. Mesh-type or porous electrodes are used to enable the separator to be filled with electrolyte and for efficient removal of the oxygen and hydrogen gases formed. It has been observed such zero gap electrolytic cells operate at higher current densities.

A typical alkaline water electrolyser include several electrolytic cells, also referred to stack of electrolytic cells, described above.

### EXAMPLES

### Materials

All materials used in the following examples were readily available from standard sources such as ALDRICH CHEMICAL Co. (Belgium) and ACROS (Belgium) unless otherwise specified. The water used was deionized water.

**PPS-Fabric-1,** a 100 µm thick woven polyphenylenesulfide fabric.

**PPS-Fabric-2,** a 300 µm thick woven polyphenylenesulfide fabric.

**Zr02,** zirconium oxide particles having a D50 particle size of approximately 0.70 µm measured with a mastersizer available from Malvern Panalytical.

**Polysulfone,** Udel P1700 NT LCD, a polysulfone resin available from SOLVAY.

**Glycerol,** a pore widening agent, commercially available from MOSSELMAN.

**NEP,** N-ethyl-pyrrolidone, commercially available from BASF.

**NBP,** N-butyl-pyrrolidone, commercially available from Taminco.

### Measurements

### Flatness/waviness

The flatness/waviness of the separators was evaluated by visual inspection.

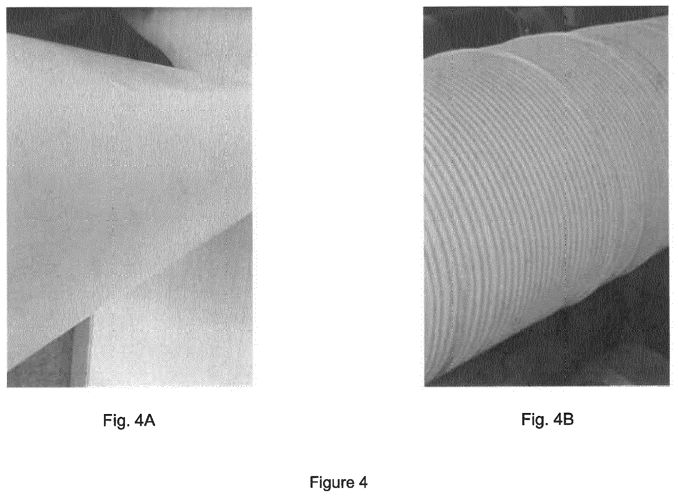

Figure 4 illustrates the waviness observed for S1 and S2.

### Viscosity

The viscosities of the dope solutions at 100 s⁻¹ and 20°C were measured with a Kinexus LAB+ Rheometer available from Malvern Panalytical using a "Cup&Bob" geometry.

### Example 1

### Preparation of the separators S-1 to S-3

A dope solution was prepared by mixing the ingredients of Table 1.

**Table 1**

| **Ingredients (wt%)** | **Dope-1** | **Dope -2** | **Dope -3** |
|---|---|---|---|
| ZrO₂ | 47.44 | = | 45.2 |
| Polysulfone | 11.86 | = | 11.3 |
| Glycerol | 1.0 | = | 1.0 |
| NEP | - | 39.7 | 42.5 |
| NBP | 39.7 | - | - |
| Viscosity (Pa.s) | 42.22 | 17.9 | 9.24 |

The viscosity at 100 s⁻¹ of the dope solutions, measured as described above, are shown in Table 1.

The separators S-1 to S-3 were prepared as schematically depicted in Figure 2.

The dope solutions were coated on both sides of a 1.3 m wide PPS-fabric according to Table 2 using slot die coating technology at a speed of 3 m/min.

The coated support was then transported towards a water bath (coagulation bath, 800) kept at 65°C.

A VIPS step was carried out before entering the water bath in an enclosed area (400, d = 7 cm, RH = 98%, ventilation).

The coated support then entered the water bath for 2 minutes during which a liquid induced phase separation (LIPS) occurred.

After an in-line washing step at 70°C during 5 minutes in water, the obtained separator was rolled up without drying, and afterwards cut in the desired format.

The obtained separators S-1 to S-3 had a total thickness as shown in Table 2.

The flatness/waviness of the separators, evaluated as described above, are shown in Table 2.

**Table 2**

| Separator | Dope solution | Thickness fabric (µm) | Thickness separator (µm) | Flatness/ waviness |
|---|---|---|---|---|
| S-1 (INV) | Dope-1 | 100 | 220 | OK |
| S-2 (COMP) | Dope-2 | 100 | 220 | NOK |
| S-3 (COMP) | Dope-3 | 300 | 500 | OK |

From the results in Table 2 it is clear that separators including a thin fabric of 150 µm or less have a sufficient flatness/waviness when the applied dope solutions have a viscosity measured at 100 s⁻¹ at a temperature of 20°C of at least 20 Pa.s.

For separators having a thicker fabric, for example 300 µm, the flatness/waviness is sufficiently good, even when the viscosity of the dope solutions are lower than 20 Pa.s measured at 100 s⁻¹ at a temperature of 20°C.

## Claims

1. A separator for alkaline electrolysis (1) comprising a porous support (10) and a first (20b) and second (30b) porous layer provided on respectively one side and the other side of the porous support, **characterized in that** the porous support has a thickness (d1) of 150 µm or less and a thickness of the separator (d2) is less than 250 µm.

2. The separator according to claim 1 wherein the thickness of the porous support is 100 µm or less.

3. The separator according to claim 1 or 2 wherein the thickness of the separator is less than 225 µm.

4. The separator according to any of the preceding claims having an ionic resistance of less than 0.1 ohm.cm² at 80°C in a 30 wt% aqueous KOH solution.

5. The separator according to any of the preceding claims wherein an open area of the porous support is from 30 up to 80 %.

6. The separator according to any of the preceding claims wherein the first and second porous layer include a polymer resin and hydrophilic inorganic particles.

7. The separator according to claim 6 wherein the polymer resin is at least one selected from the group consisting of polysulfone, polyethersulfone and polyphenylsulfide.

8. The separator according to claim 6 or 7 wherein the hydrophilic inorganic particles are selected from at least one of the group consisting of zirconium oxide, zirconium hydroxide, magnesium oxide, magnesium hydroxide, titanium oxide, titanium hydroxide and bariumsulfate.

9. The separator according to claim 8 wherein the hydrophilic inorganic particles have a particle size a particle size D50 of 0.7 µm or lower.

10. The separator according to any of the preceding claims wherein the first and the second porous layers are the same.

11. A method of manufacturing a separator for alkaline water electrolysis comprising the steps of:
- applying a dope solution including a polymer resin, hydrophilic inorganic particles and a solvent on both sides of a porous support; and
- performing phase inversion on the applied dope solutions thereby forming a first and a second porous layer on one and the other side of the support;
**characterized in that** the porous support has a thickness (d1) of 150 µm or less and the thickness of the separator (d2) is less than 250 µm and wherein the viscosity of the dope solution measured at a shear rate of 100 s⁻¹ and a temperature of 20°C is at least 20 Pa.s.

12. The method according to claim 11 wherein the solvent is at least one selected from the group consisting of N-methyl-2-pyrrolidone (NMP), N-ethyl-2-pyrrolidone (NEP), N-butyl-2-pyrrolidone, N,N-dimethyl-formamide (DMF), formamide, dimethylsulfoxide (DMSO), N,N-dimethylacetamide (DMAC) and acetonitrile.

13. The method according to claim 12 wherein the solvent is N-butyl-2-pyrrolidone.

14. The method according to any of the claims 11 to 13 wherein the phase inversion step includes a Vapour Induced Phase Separation (VIPS) step and a Liquid Induced Phase Inversion (LIPS) step.

15. An alkaline water electrolysis device comprising a separator as defined in any of the claim 1 to 10 located between a cathode and an anode.
